# EUROPEAN PATENT SPECIFICATION

(11) **EP 3 517 001 B1**
(45) Date of publication and mention of the grant of the patent: **07.10.2020**
(21) Application number: 18153659.0
(22) Date of filing: 26.01.2018
(51) Int. Cl.: A47J 43/08, A47J 43/046

(54) **KITCHEN APPLIANCE COMPRISING A CONTAINER WITH A COUPLING SYSTEM**
KÜCHENGERÄT MIT EINEM BEHÄLTER MIT EINEM KOPPLUNGSSYSTEM
APPAREIL DE CUISINE COMPRENANT UN RÉCIPIENT MUNI D'UN SYSTÈME DE COUPLAGE

(43) Date of publication of application: 31.07.2019
(73) Proprietor: BSH Hausgeräte GmbH, 81739 München (DE)
(72) Inventor: Zilnik, Marko, 1218 Komenda (SI); Koscak, Ales, 6230 Postojna (SI); Orbanic, Henri, 1000 Ljubljana (SI)

(56) References cited:
- EP-A1- 0 570 691
- CN-A- 104 172 950
- DE-A1- 3 433 008
- DE-A1-102012 206 162
- GB-A- 2 348 323
- US-A1- 2017 273 510

## Description

### Background of the Invention

The present invention relates to kitchen appliances comprising a container with a coupling system that allows for use of different processing tools that rotate at different speeds.

### State of the Art

There is a trend in the development of kitchen appliances which also turned into a requirement from a customer, namely that they have to be as versatile as possible. That means they have to able to process different quantities of food ingredients with different processing tools, i.e. a stirring or beating whisk, a beater, a kneading hook, etc. The all different processing tools are used for different types of food processing i.e. mixing, grinding, blending, cutting, chopping, kneading, milling and beating. It is known that different kinds of food processing require different processing speeds, that is rotational speeds of the processing tool. For instance, operations involved with knifes, disks etc. require higher processing speeds than those involved with a kneading hook or a cube cutter which require lower processing speeds. Thus, in order to get optimal results one has to choose the right tool for a specific job that is done using a determined speed. In order to provide for a versatility kitchen appliances are equipped with drive units that comprise at least two drive outlets that rotate at different rotational speeds. This is normally enabled using planetary gearing systems.
Therefore, it is desirable that afore-mentioned processes be executed by means of a single kitchen appliance comprising a container with a coupling system that is configured to be used with different processing tools which are best used at determined processing speeds.

Kitchen appliances are known that comprise coupling systems which enable attaching of different processing tools rotating at different speeds for different kinds of food processing. EP 0570691 A1 discloses a multi-purpose food processor having at least a first and a second output shaft, which output shafts are driven by a motor at different speeds and are mounted concentrically relative to one another, the first coupling is connectable to a first counter-coupling and the second coupling is connectable to a second counter-coupling. The first counter-coupling is arranged on the bottom of a first operating container, and the second counter-coupling is arranged on the bottom of a second operating container. In accordance with the type of processing, different operating tools can be inserted in the respective operating container for processing food, which operating tools are driven via the respective counter-coupling in the operating container. Mounted at the upper end of the output shafts projecting from the housing of the multi-purpose food processor are in each case a disc-shaped first ring and second ring which extend outwards and on which the toothing of the relevant coupling is formed in each case. The rings lie concentrically one above the other in respect of the output shafts and have different diameters, the lower ring located nearer to the housing having the larger diameter and the lower speed. As a result, large torques can be transmitted at the second coupling at a low speed and smaller torques can be transmitted at the first coupling at a higher speed. The arrangement leads to a low constructional height with particularly smooth running.

The invention has a drawback in that it requires use of two containers with a different counter-coupling in each case which allows for a different rotating speed. In each container food is effectively processed with its counter-coupling at a determined speed. In order to use a different speed one has to replace the counter-coupling or use a different container.
In case where a tool is replaced one has to replace the counter-coupling as well. For instance when a container with a kneading tool and corresponding slow counter-coupling is chosen, in order to process food with higher rotational speed (mixing) a mixing tool has to be attached and a faster counter-coupling mounted. Because of the construction there is no possibility to integrate both counter-couplings into one unit which is part of the container of the kitchen appliance or attached to it.
The use of this invention is thus quite complicated as in practice two containers have to be used. Moreover, if the processing tool which is normally used with the specific container is changed, one always has to think about which counter-coupling to use with it.

The invention according to CN 104172950 A is a food processor base, comprising an upper cover and a lower cover, the upper cover and the lower cover is provided with a motor, a motor output shaft, a speed reducing assembly, an output connector; the lower cover is provided with a hollow cylindrical motor; the motor output shaft is set on the motor, speed-down subassembly is set between the motor output shaft and the output coupler, and the upper cover is equipped with output coupling for connection with the processing tool, a selecting component for selecting a different output coupler on the reducing component. At least two speed output food processing function of the invention can realize the conversion of speed by moving speed switching mode is simple and reliable, the output coupler with a different processing tool combination, can realize different functions, is matched with the proper speed, it can realize one machine with multi purposes.
This invention solves the problem of having several output shafts with drive outlets rotating at different speeds in that it provides a single output coupling. The speed can be adjusted by means of a special lever. A substantial disadvantage is in that it is possible to inadvertently adjust and use the highest speed with the processing tool which is not suitable to be used with that speed, for instance a kneading tool. This can result in damage to the processor and the user.
US2017/273510 A1, GB2348323 A, DE102012206162 A1 and DE3433008 A1 disclose kitchen appliances with coaxial output shafts rotating at different speeds.

### Problem to be solved

It is an object of the present invention to improve versatility of a kitchen appliance in the most efficient and convenient way possible.

### Solution according to the invention

The object is achieved by a kitchen appliance according to the features of claim 1. Advantageous embodiments that can be implemented by themselves or in combination are described in dependent claims.

The invention relates to a kitchen appliance, preferably a food processor, including a container, configured to be removably attachable to a base of the food processor, comprising a bottom with an opening and a coupling system mounted therein, the coupling system comprising a fixing element, a movable element, a resilient means arranged between the fixing element and the movable element and a coupler having a first engaging means and a second engaging means and being fixedly connected to the end of the movable element facing the bottom, wherein the coupler can be coupled to a first drive outlet or a second drive outlet of the food processor, wherein upon activation of the movable element the coupler is displaceable to a first operating position in which the first engaging means is engagable with engaging means of the first drive outlet rotating at a first rotational speed and upon deactivation of the movable element the coupler is displaceable to a second operating position in which the second engaging means is engagable with engaging means of the second drive outlet rotating at a second rotational speed.

The coupling system, more specifically the coupler actually combines two couplings (first engaging means and second engaging means) and as such represents an integrated coupling. This solution saves space for mounting the coupling in the bottom of the container and allows for a simpler design without many components.

One of the advantages of the invention is that it is possible to change speed of the food processor without having to dismount the container from the base of the food processor. To change speed actually means to change or to select a gear of the drive unit of the appliance, i.e. rpm range thereof. A means for adjusting speed (usually a knob) is used only for fine adjustment of the selected rpm range.

Furthermore, the container according to the invention doesn't have a dome in its bottom that is common for kitchen appliances of this type. Such a dome comprises a hole through which a shaft of the processing tool can be attached to the drive outlet. Instead, the container according to the invention has a small cavity in the bottom for receiving the coupler. The rest of the coupling system is arranged substantially outside this cavity.

The kitchen appliance with which the container according to the invention is preferably used is a food processor. This kind of kitchen machine is compact and space-saving and is mainly used for slicing, rasping, beating cream, kneading dough, blending etc. Usually it is available with two processing speeds, sometimes even three. Different drive outlets rotating at different speeds are active at all times. In that manner they always rotate and the speed of the shaft or the processing tool is dependent on the speed of the drive outlet that is connected with the shaft or the processing tool.

The solution is simple and cost effective and configured to be produced in series. Moreover, it enables safe use.

### Embodiments of the invention

In a preferred embodiment, the first rotational speed is higher than the second rotational speed. This means that the first drive outlet rotates at a speed that is higher than the speed of the second drive outlet rotating at a second rotational speed.

In another preferred embodiment, the first rotational speed is lower than the second rotational speed. This means that the first drive outlet rotates at a speed that is lower than the speed of the second drive outlet rotating at a second rotational speed.

According to one embodiment a sleeve is arranged between the fixing element and a tubular section of a base. This means that centering of the coupling system in the hole of the container bottom, more precisely in the tubular section of the base is improved. In this way engagement and disengagement of the coupler to the drive outlets of the food processor is effected more smoothly. Moreover, in case the sleeve is made of a vibration insulating material, the vibration level that is transferred from the drive outlet to the processing tool or vice versa is reduced.

According to the invention, activation of the movable element, i.e. displacement of the coupler to the first operating position is executable by attaching a first shaft to the coupling system. The first shaft is designed such that its cavity in the lower part receives the fixing element and the movable element in a manner that the coupler is activated. The same effect is achieved also by mounting a similarly designed processing tool.

Similarly, deactivation of the movable element, i.e. displacement of the coupler to the second operating position is executable by attaching a second shaft to the coupling system. The second shaft is designed such that its cavity in the lower part receives the fixing element and the movable element in a manner that the coupler is deactivated. In fact the lower part of the shaft has another cavity for receiving the protruding part of the movable element in the deactivated position. The same effect is achieved also by mounting a similarly designed processing tool.

According to the embodiment the first engaging means and the second engaging means of the coupler are positioned substantially on the same horizontal plane. That being said the centre of the first engaging means is positioned substantially on the same height as the centre of the second engaging means. This has the effect that the coupler is designed in a compact manner and is specifically low.

Typically, the first engaging means is a series of equally spaced teeth on the outside of the coupler, whereas the second engaging means is a series of equally spaced teeth on the inside of the coupler.

It is conceivable that the resilient means is a compression spring.

Specifically, the fixing element has protrusions on its periphery in order to ensure better and more secure attachment of the shaft or the tool to the coupling system, more precisely to the fixing element.

Preferably, the coupler is attached to the movable element via form-fitting, force-fitting or material connection. If the force-fitting connection is used, the coupler is fitted to the movable element by means of screws or bolts. Optionally, the coupler and the movable element are configured so as to form a threaded connection. Material connection means the coupler is attachable to the movable element by means of glueing, welding, etc.

For the sake of clarity it should be emphasized that activated coupling system means that the movable element of the coupling system is activated. i.e. plunged into the fixing element so as to couple the coupler to the first drive outlet of the food processor. In this position the spring between the movable element and the fixing element is compressed.

Similary, deactivated coupling system means that the movable element of the coupling system is deactivated. The spring between the movable element and the fixing element is decompressed, the movable element projects from the fixing element and the coupler abuts the base of the bottom. In this position the coupler is coupled to the second drive outlet. So, the coupling system is not deactivated in the sense of transferring mechanical power but the movable element is deactivated in relation to the fixing element so that power can be transferred from the second drive outlet to the shaft and further to the processing tool or directly to the processing tool.

Fixing element bears its name because it is configured to fix the shaft or the processing tool to the coupling system for rotating and transferring mechanical power from the drive outlet to the shaft and further to the processing tool or directly to the processing tool. So, mechanical power is typically transferred from the the drive outlets via the coupler to the movable element and from the movable element to the fixing element.

The movable element and the fixing element are fixed in rotation in relation to each other. This is achieved by means of form-fitting. Thus, the outer form of the movable element fits the inner form more precisely the cavity of the fixing element. For example, the movable element and the cavity of the fixing element have the same cross-section, for instance hexagonal.

It is conceivable that the cross-section of the movable element and the cavity of the fixing element and/or the shaft or the tool is of any other suitable form, for example rectangular, triangular, elliptical or similar.

Normally the base of the bottom is integral part of the bottom but can also be a separate part.

It is conceivable that the coupling system can be detached from the bottom of the container.

### Brief description of the figures

- Fig. 1: shows the food processor without the container
- Fig. 2: shows the container with activated coupling system
- Fig. 3: shows the container with deactivated coupling system
- Fig. 4: shows activated coupling system and the drive outlets in detail
- Fig. 5: shows deactivated coupling system and the drive outlets in detail
- Fig. 6: shows activated coupling system with the first shaft attached
- Fig. 7: shows deactivated coupling system with the second shaft attached

### Detailed description

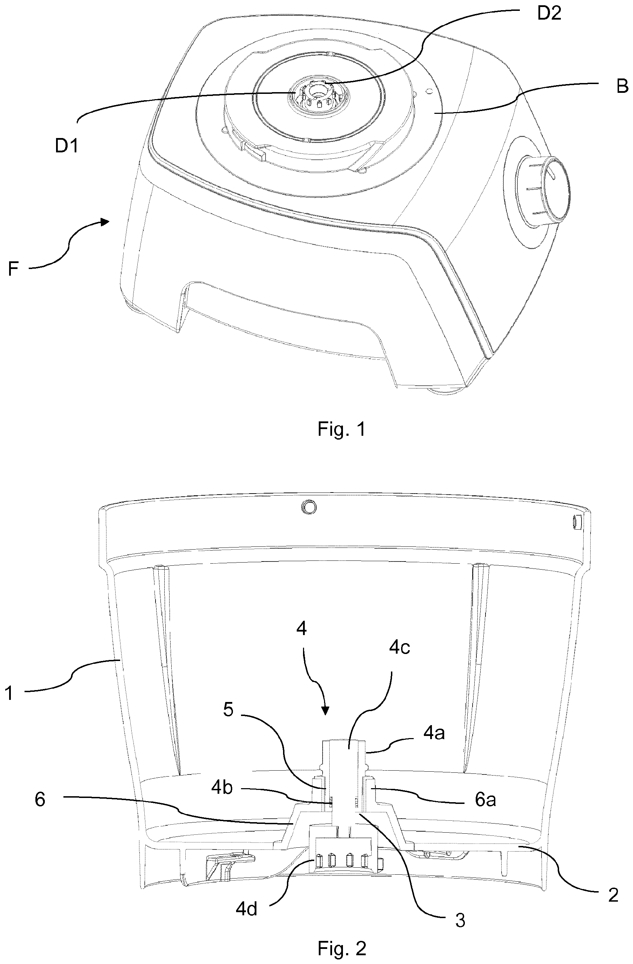

Fig. 1 depicts a food processor F according to the invention. The container is not shown. The processor has a base B on which the container is put. The container can be secured to the base B by means of a bayonet lock. The first drive outlet D1 is the outer one and the second drive outlet D2 is the inner one in relation to the centre of rotation of both drive outlets which are also geometrically concentric. The first drive outlet D1 has its equally spaced teeth arranged on the inside, i.e. the side facing the centre of rotation and the second drive outlet D2 has its equally spaced teeth arranged on the outside, i.e. the side facing away from the centre of rotation. A knob is used for adjusting the processing speed, in fact the rotational speed of the processing tool.

Fig. 2 shows the container 1 with the activated coupling system 4. The container 1 has a bottom 2 in the centre of which an opening 3 is situated. Around the opening 3 is arranged a base 6 which has a frusto-conical shape and in its lower region extends to the bottom 2 and in its upper region extends as a tubular section 6a. In the tubular section 6a first a sleeve 5 is inserted. On top of it comes the coupling system 4 with a fixing element 4a, a resilient means 4b in the form of a compression spring, a movable element 4c and a coupler 4d. The coupling system 4 is activated and in the first operating position in which the compression spring is compressed and the coupler 4d is coupled to the first drive outlet D1 so that its first engaging means in the form of equally spaced teeth arranged on its outside engages with the equally spaced teeth arranged on the inside of the first drive outlet D1 (not shown).

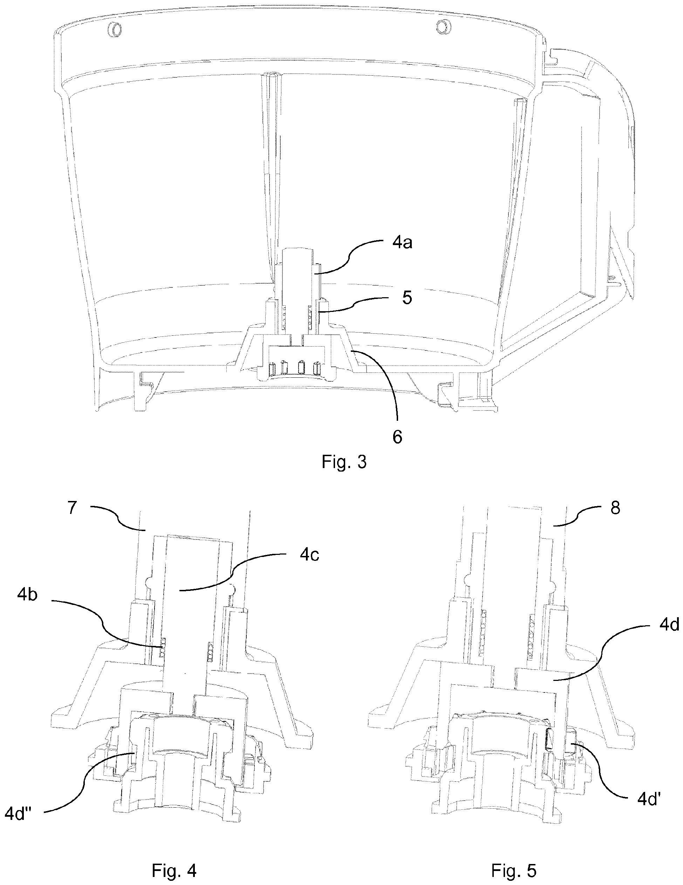

Fig. 3 is similar to Fig. 2 and depicts the container 1 with the deactivated coupling system 4 which is in the second operating position. This means that the movable element 4c protrudes from the fixing element 4a. The compression spring 4b is released and the coupler 4d is coupled to the second drive outlet D2 so that its second engaging means in the form of equally spaced teeth arranged on its inside engages with the equally spaced teeth arranged on the outside of the second drive outlet D2 (not shown). The coupler 4d abuts the surface of the base 6 facing the food processor F.

In Fig. 4, the activated coupling system 4 and in turn the first operating position and the drive outlets D1 and D2 are shown in more detail. A first shaft 7 is attached to the fixing element 4a of the coupling system 4. The first shaft 7 is designed such that its lower part for attaching to the coupling system 4 has a cavity. This cavity is dimensioned so that when the first shaft 7 is put on the fixing element 4a the movable element 4c is displaced to connect the coupler 4d with the first drive outlet D1 and the compression spring 4b is compressed. Instead of the shaft 7 a similarly designed processing tool can be used. In the first operating position the first engaging means 4d' in the form of teeth is engaged with engaging means of the first drive outlet D1 rotating at a first rotational speed. The first rotational speed is normally the lowest and is suitable for kneading dough and cube cutting.

Fig. 5 is similar to Fig. 4 and the deactivated coupling system 4 and in turn the second operating position and the drive outlets D1 and D2 are shown in more detail. A second shaft 8 is attached to the fixing element 4a of the coupling system 4. The second shaft 8 is designed such that its lower part for attaching to the coupling system 4 has two cavities. The bigger cavity is designed for receiving the fixing element 4a and the smaller cavity is designed for receiving the movable element 4c. When the second shaft 8 is attached to the coupling system 4, more specifically to the fixing element 4a, the fixing element 4a fits in the bigger cavity and the movable element 4c fits in the smaller cavity which is situated in the bigger cavity. That being said the movable element 4c does not get activated and the compression spring 4 continues to act on it to force it to protrude from the fixing element 4a. Instead of the shaft 8 a similarly designed processing tool can be used. In the second operating position the second engaging means 4d" in the form of teeth is engaged with engaging means of the second drive outlet D2 rotating at a second rotational speed. The second rotational speed is normally higher than the first one and is suitable for processes involved with a knife or cutting disks.

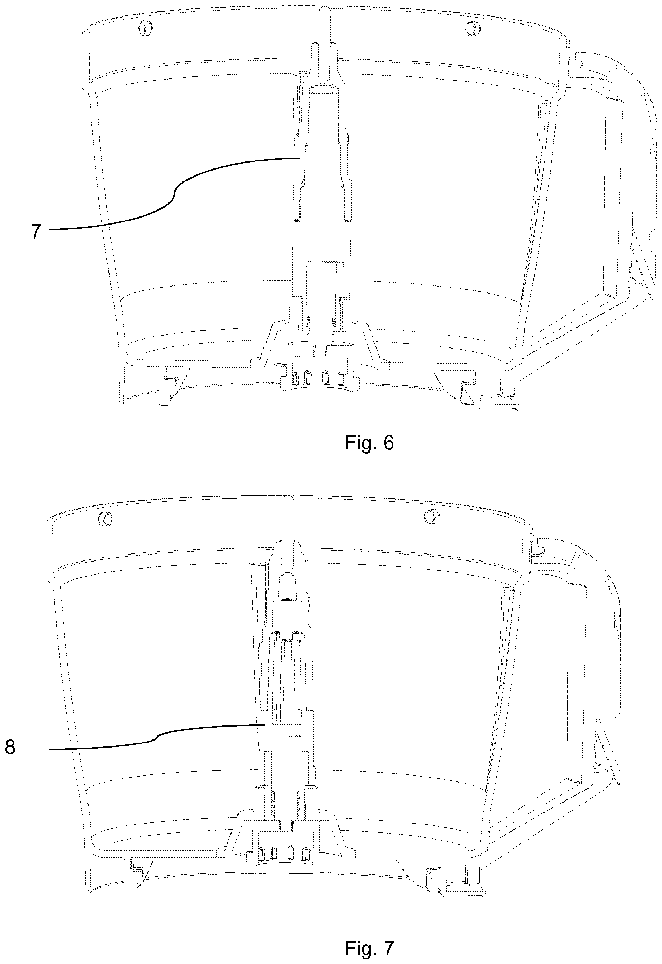

Fig. 6 depicts the container 1 with the first shaft 7 attached. The shaft can be anchored to the lid with its upper part in order to increase its stiffness. This is particularly important when a kneading tool is attached to the shaft 7 as kneading in involved with substantial forces which can act on the shaft.

Fig. 7 shows the container 1 with the second shaft 8 attached. This shaft as well can be anchored to the lid with its upper part in order to increase its stiffness.

### Reference signs list

- B: base
- D1: first drive outlet
- D2: second drive outlet
- F: food processor
- 1: container
- 2: bottom of container
- 3: opening
- 4: coupling system
- 4a: fixing element
- 4b: resilient element
- 4c: movable element
- 4d: coupler
- 4d': first engaging means
- 4d": second engaging means
- 5: sleeve
- 6: base
- 6a: tubular section
- 7: first shaft
- 8: second shaft

## Claims

1. A kitchen appliance, preferably a food processor, including a container (1), configured to be removably attachable to a base (B) of the food processor (F), comprising a bottom (2) with an opening (3) and a coupling system (4) mounted therein, the coupling system (4) comprising a fixing element (4a), a movable element (4c), a resilient means (4b) arranged between the fixing element (4a) and the movable element (4c) and a coupler (4d) having a first engaging means (4d') and a second engaging means (4d") and being fixedly connected to the end of the movable element (4c) facing the bottom (2), wherein the coupler (4d) can be coupled to a first drive outlet (D1) or a second drive outlet (D2) of the food processor (F), **characterized in that** upon activation of the movable element (4c), which is executable by attaching a first shaft to the coupling system (4), the coupler (4d) is displaceable axially to a first operating position in which the first engaging means (4d') is engagable with engaging means of the first drive outlet (D1) rotating at a first rotational speed and upon deactivation of the movable element (4c), which is executable by attaching a second shaft (8) to the coupling system (4), the coupler (4d) is displaceable axially to a second operating position in which the second engaging means (4d") is engagable with engaging means of the second drive outlet (D2) rotating at a second rotational speed.

2. Kitchen appliance (1) according to any of the preceding claims, wherein the first engaging means (4d') is a series of equally spaced teeth on the outside of the coupler (4d).

3. Kitchen appliance (1) according to any of the preceding claims, wherein the second engaging means (4d") is a series of equally spaced teeth on the inside of the coupler (4d).

4. Kitchen appliance (1) according to any of the preceding claims, wherein a sleeve (5) is arranged between the fixing element (4a) and a tubular section (6a) of a base (6).

5. Kitchen appliance (1) according to any of the preceding claims, wherein the first engaging means (4d') and the second engaging means (4d") of the coupler (4d) are positioned substantially on the same horizontal plane.

6. Kitchen appliance (1) according to any of the preceding claims, wherein the resilient means (4b) is a compression spring.

7. Kitchen appliance (1) according to any of the preceding claims, wherein the fixing element (4a) has protrusions on its periphery.

8. Kitchen appliance (1) according to any of the preceding claims, wherein the coupler (4d) is attached to the movable element (4a) via form-fitting, force-fitting or material connection.

9. Kitchen appliance (1) according to any of the preceding claims, wherein the first rotational speed is higher than the second rotational speed.

10. Kitchen appliance (1) according to any of claims 1-8, wherein the first rotational speed is lower than the second rotational speed.

11. Kitchen appliance (1) according to any of the preceding claims, wherein cross-section of the movable element (4c) and the cavity of the fixing element (4a) and/or the shaft or the tool is of rectangular, triangular, elliptical or similar form.

## Patentansprüche

1. Küchengerät, vorzugsweise Küchenmaschine, mit einem Behälter (1), der so konfiguriert ist, dass er sich abnehmbar an einem Sockel (B) der Küchenmaschine (F) anbringen lässt, und einen Boden (2) mit einer Öffnung (3) und einem darin montierten Kopplungssystem (4) umfasst, wobei das Kopplungssystem (4) ein Fixierelement (4a), ein bewegliches Element (4c), ein zwischen dem Fixierelement (4a) und dem beweglichen Element (4c) angeordnetes elastisches Element (4b) und einen Koppler (4d) mit einem ersten Eingriffmittel (4d') und einem zweiten Eingriffmittel (4d") umfasst, der fest mit dem dem Boden (2) zugewandten Ende des beweglichen Elements (4c) verbunden ist, wobei der Koppler (4d) mit einem ersten Abtrieb (D1) oder einem zweiten Abtrieb (D2) der Küchenmaschine (F) gekoppelt sein kann, **dadurch gekennzeichnet, dass** der Koppler (4d) bei Aktivierung des beweglichen Elements (4c), die durch Anbringen einer ersten Welle an dem Kopplungssystem (4) erfolgen kann, axial in eine erste Betriebsposition verschiebbar ist, in der das erste Eingriffmittel (4d') mit Eingriffmitteln des ersten Abtriebs (D1) in Eingriff gebracht werden kann, der sich mit einer ersten Drehzahl dreht, und der Koppler (4d) bei Deaktivierung des beweglichen Elements (4c), die durch Anbringen einer zweiten Welle (8) an dem Kopplungssystem (4) erfolgen kann, axial in eine zweite Betriebsposition verschiebbar ist, in der das zweite Eingriffmittel (4d") mit Eingriffmitteln des zweiten Abtriebs (D2) in Eingriff gebracht werden kann, der sich mit einer zweiten Drehzahl dreht.

2. Küchengerät (1) nach einem der vorhergehenden Ansprüche, wobei es sich bei dem ersten Eingriffmittel (4d') um eine Reihe von gleichmäßig beabstandeten Zähnen auf der Außenseite des Kopplers (4d) handelt.

3. Küchengerät (1) nach einem der vorhergehenden Ansprüche, wobei es sich bei dem zweiten Eingriffmittel (4d") um eine Reihe von gleichmäßig beabstandeten Zähnen auf der Innenseite des Kopplers (4d) handelt.

4. Küchengerät (1) nach einem der vorhergehenden Ansprüche, wobei zwischen dem Fixierelement (4a) und einem rohrförmigen Abschnitt (6a) eines Sockels (6) eine Hülse (5) angeordnet ist.

5. Küchengerät (1) nach einem der vorhergehenden Ansprüche, wobei das erste Eingriffmittel (4d') und das zweite Eingriffmittel (4d") des Kopplers (4d) im Wesentlichen in der gleichen horizontalen Ebene positioniert sind.

6. Küchengerät (1) nach einem der vorhergehenden Ansprüche, wobei es sich bei dem elastischen Mittel (4b) um eine Druckfeder handelt.

7. Küchengerät (1) nach einem der vorhergehenden Ansprüche, wobei das Fixierelement (4a) an seinem Umfang Vorsprünge aufweist.

8. Küchengerät (1) nach einem der vorhergehenden Ansprüche, wobei der Koppler (4d) über eine formschlüssige Verbindung, eine kraftschlüssige Verbindung oder eine Materialverbindung an dem beweglichen Element (4a) angebracht ist.

9. Küchengerät (1) nach einem der vorhergehenden Ansprüche, wobei die erste Drehzahl höher ist als die zweite Drehzahl.

10. Küchengerät (1) nach einem der Ansprüche 1 bis 8, wobei die erste Drehzahl niedriger ist als die zweite Drehzahl.

11. Küchengerät (1) nach einem der vorhergehenden Ansprüche, wobei der Querschnitt des beweglichen Elements (4c) und des Hohlraums des Fixierelements (4a) und/oder der Welle oder des Werkzeugs eine rechteckige, dreieckige, elliptische oder ähnliche Form aufweist.

## Revendications

1. Appareil de cuisine, de préférence un robot culinaire, incluant un récipient (1), configuré afin de pouvoir être fixé de manière amovible à une base (B) du robot (F), comprenant un fond (2) avec une ouverture (3) et un système de couplage (4) monté à l'intérieur, le système de couplage (4) comprenant un élément de fixation (4a), un élément mobile (4c), un moyen résilient (4b) agencé entre l'élément de fixation (4a) et l'élément mobile (4c) et un coupleur (4d) présentant un premier moyen de mise en prise (4d') et un second moyen de mise en prise (4d") et étant raccordé de manière fixe à l'extrémité de l'élément mobile (4c) faisant face au fond (2), dans lequel le coupleur (4d) peut être raccordé à une première sortie d'entraînement (D1) ou à une seconde sortie d'entraînement (D2) du robot (F), **caractérisé en ce que** lors de l'activation de l'élément mobile (4c), qui est exécutable en fixant un premier arbre au système de couplage (4), le coupleur (4d) peut être déplacé de manière axiale vers une première position opérationnelle dans laquelle le premier moyen de mise en prise (4d') peut être mis en prise avec un moyen de mise en prise de la première sortie d'entraînement (D1) tournant à une première vitesse de rotation et lors de la désactivation de l'élément mobile (4c), qui est exécutable en fixant un second arbre (8) au système de couplage (4), le coupleur (4d) peut être déplacé de manière axiale vers une seconde position opérationnelle dans laquelle le second moyen de mise en prise (4d") peut être mis en prise avec un moyen de mise en prise de la seconde sortie d'entraînement (D2) tournant à une seconde vitesse de rotation.

2. Appareil de cuisine (1) selon l'une quelconque des revendications précédentes, dans lequel le premier moyen de mise en prise (4d') est une série de dents également espacées sur l'extérieur du coupleur (4d).

3. Appareil de cuisine (1) selon l'une quelconque des revendications précédentes, dans lequel le second moyen de mise en prise (4d") est une série de dents également espacées sur l'intérieur du coupleur (4d).

4. Appareil de cuisine (1) selon l'une quelconque des revendications précédentes, dans lequel un manchon (5) est agencé entre l'élément de fixation (4a) et une section tubulaire (6a) d'une base (6).

5. Appareil de cuisine (1) selon l'une quelconque des revendications précédentes, dans lequel le premier moyen de mise en prise (4d') et le second moyen de mise en prise (4d") du coupleur (4d) sont positionnés sensiblement sur le même plan horizontal.

6. Appareil de cuisine (1) selon l'une quelconque des revendications précédentes, dans lequel le moyen résilient (4b) est un ressort de compression.

7. Appareil de cuisine (1) selon l'une quelconque des revendications précédentes, dans lequel l'élément de fixation (4a) présente des saillies sur sa périphérie.

8. Appareil de cuisine (1) selon l'une quelconque des revendications précédentes, dans lequel le coupleur (4d) est fixé à l'élément mobile (4a) par un ajustement de forme, un ajustement en force, ou un raccordement matériel.

9. Appareil de cuisine (1) selon l'une quelconque des revendications précédentes, dans lequel la première vitesse de rotation est supérieure à la seconde vitesse de rotation.

10. Appareil de cuisine (1) selon l'une quelconque des revendications 1 à 8, dans lequel la première vitesse de rotation est inférieure à la seconde vitesse de rotation.

11. Appareil de cuisine (1) selon l'une quelconque des revendications précédentes, dans lequel une coupe transversale de l'élément mobile (4c) et de la cavité de l'élément de fixation (4a) et/ou de l'arbre ou de l'outil est de forme rectangulaire, triangulaire, elliptique ou similaire.
